(19) Europäisches Patentamt
European Patent Office
Office européen des brevets

(11) Numéro de publication: **0 021 959**
**A1**

(12) # DEMANDE DE BREVET EUROPEEN

(21) Numéro de dépôt: **80400855.5**

(22) Date de dépôt: **13.06.80**

(51) Int. Cl.³: **C 08 F 20/28**
C 08 F 2/10, C 08 F 4/40
C 08 F 4/72, C 09 K 17/00

(30) Priorité: **26.06.79 FR 7916368**

(43) Date de publication de la demande:
**07.01.81 Bulletin 81/1**

(84) Etats Contractants Désignés:
**AT BE CH DE FR GB IT LI LU NL SE**

(71) Demandeur: **RHONE-POULENC INDUSTRIES**
**22, avenue Montaigne**
**F-75008 Paris(FR)**

(72) Inventeur: **Richard, Christian**
**28, avenue du Général Leclerc**
**F-58500 Clamecy(FR)**

(74) Mandataire: **Martin, Henri et al,**
**RHONE-POULENC Service Brevets Chimie et Polymères**
**Boîte Postale 753**
**F-75360 Paris Cedex 08(FR)**

(54) **Composition polymérisable à base d'un ester-alcool éthylénique soluble dans l'eau, et son application.**

(57) La présente invention a trait à une composition polymérisable.

Elle se caractérise par le fait qu'elle comprend au moins un monomère soluble dans l'eau du groupe des esters éthyléniques présentant au moins une fonction alcool et un système catalytique à base d'un sel stanneux organique.

Elle s'applique notamment au traitement des sols.

EP 0 021 959 A1

TITRE MODIFIÉ
voir page de garde



NOUVELLE COMPOSITION POLYMERISABLE A BASE D'UN MONOMERE SOLUBLE DANS L'EAU RENFERMANT AU MOINS UN ESTER ETHYLENIQUE PRESENTANT UNE FONCTION ALCOOL

La présente invention a trait à une composition polymérisable à base d'un monomère soluble dans l'eau renfermant au moins un ester ethylénique présentant une fonction alcool.

Elle concerne aussi l'application de ladite composition au traitement des sols.

On a déjà proposé dans le brevet français 1 113 937 un procédé pour stabiliser un sol qui consiste à incorporer au sol une solution ou dispersion aqueuse d'une composition copolymérisable comprenant un dérivé acrylique et une alcoylidène-diacrylamide.

Selon ce procédé on fait en particulier appel à de l'acrylamide.

Dans le cas de sols alcalins l'on utilise comme catalyseur des persulfates et comme activants de ces catalyseurs des polyamines, telles que la triéthanolamine.

On sait que l'on peut aussi mettre en oeuvre comme système catalytique des peroxydes organiques tels que le peroxyde de benzoyle et une amine telle que la diméthylaniline.

Selon de tels procédés on ajoute le catalyseur approprié au mélange des solutions aqueuses des divers dérivés monomère, on mélange au sol les compositions catalysées et on laisse polymériser.

Mais avec de telles compositions, pratiquement l'on est obligé de faire appel à des produits toxiques, comme l'acrylamide, ou une maine tertiaire. De plus, par exemple dans le cas du système catalytique peroxyde organique ami amine tertiaire le système doit être préparé sur place, ce qui présente des risques en raison de la toxicité de certains des produits.

On a aussi proposé dans le GB 1 303 456 de faire appel à des acrylates ou méthacrylates d'hydroxyalkyle solubles dans l'eau, mais dans ce cas d'une part l'on doit faire appel à des solutions diluées, d'autre part il est

nécessaire de mettre en oeuvre un sel argent soluble dans l'eau, et un persulfate également soluble dans l'eau.

Là encore, il faut une solution fraichement préparée.

Mais maintenant on a trouvé, et c'est ce qui fait l'objet de la présente incention, une nouvelle composition polymérisable caractérisée par le fait qu'elle comprend au moins un monomère soluble dans l'eau du groupe des esters éthyléniques, présentant au moins une fonction alcool et un système catalytique à base d'un sel stanneux organique.

De manière générale, le monomère répond à la formule

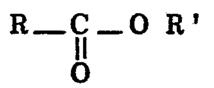

dans laquelle R = radical alkyle insaturé

R'= radical alkyle présentant une fonction alcool libre

Il est notamment constitué par des dérivés du type hydroxyalkylacrylate ou méthacrylate et en particulier par le 2-hydroxyéthyl méthacrylate de formule

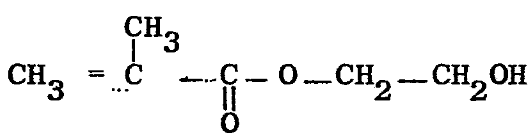

ou le 2-hydroxypropyl acrylate ou méthacrylate ou le 2-hydroxyethyl acrylate.

Comme dit précédemment le système catalytique est à base d'un sel stanneux organique. Avantageusement le sel stanneux est constitué par de l'octoate stanneux, éventuellement le système catalytique peut renfermer d'autres composés tels que du groupe des persulfates alcalins, notamment d'ammonium et de la triéthanolamine.

La mise en oeuvre de la composition selon l'invention se fait facilement. On peut notamment faire appel à des solutions de monomère + catalyseur pratiquement pures. On peut aussi diluer ces solutions d'une quantité d'eau variable, avantageusement cette dilution est telle que la solution renferme de 20 à 80 % en poids de monomère + catalyseur.

On peut incorporer à ce mélange gélifiable d'autres monomères ou réactifs en vue de modifier certaines propriétés, par exemple l'adhérence. En effet, l'effet catalytique qui se développe entre l'octoate stanneux et les 2-hydroxyalkylacrylate ou méthacrylate permet de faire réagir d'autres monomères éthyléniques ou d'autres réactifs tels que alcools et esters.

Comme déjà dit les compositions selon l'invention peuvent avoir de nombreuses applications. Elles conviennent particulièrement pour toute application où l'on recherche les propriétés suivantes : produit peu visqueux, gélifiable à froid, capable d'évoluer dans un temps connu à l'avance vers des propriétés physiques et mécaniques bien déterminées. Ces propriétés peuvent être :

- très léger retrait
- taux de gonflement de quelques % à 50 % dans l'eau
- module d'élasticité de 1 000 à 10 000 kg/cm2
- résistance à la rupture, compressions quelques kg/cm jusqu'à plus de 200 kg/cm2
- produit peu toxique, non dangereux à manipuler notamment dans les endroits peu aérés. Le mélange a un point éclair supérieur à 100°C lorsqu'il est utilisé pur, c'est-à-dire sans dilution.

Parmi ces applications, on peut citer d'une manière générale le traitement de toutes structures poreuses ou fissurées dans le but de consolider ou d'étancher. Il peut s'agir :

- de sols meubles
- de roches fissurées
- de constructions en béton.

Parmi les avantages des compositions selon l'invention on peut mentionner :

- une très faible toxicité, dans le cas de 2-hydroxypropylmethacrylate on donne la valeur de LD 50 de 11 200 selon Encyclopedia of Polymer Science and technology, Volume 1 p. 259 table 6.

- un point éclair supérieur à 100°C
- un emploi simple il suffit de mélanger le monomère et le catalyseur qui sont liquides (<500 cp à 20°C)
- une influence très minime de la température. En effet à 4°C, le temps de prise n'est que légèrement plus long que celui à 20°C quelques minutes pour 30 minutes.
- enfin des propriétés physiques et mécaniques réglables dans de larges domaines, notamment pour
  - les temps de prises
  - les taux de gonflement
  - les modules d'élasticités
  - les résistances à la rupture.

Mais la présente invention sera plus aisément comprise à l'aide des exemples suivants donnés à titre illustratif mais nullement limitatif.

Les conditions opératoires et le temps de gélification sont exprimés dans le tableau ci-après, les pourcentages étant exprimés en poids.

| Ex. | H.E.M.A 2 hydroxyéthyl méthacrylate | octoate stanneux | eau | +°C | temps de gélification |
|---|---|---|---|---|---|
| 1 | 99,5 | 0,5 | - | 20°C | 20 mm |
| 2 | 99 | 1 | - | 20°C | 10 mm |
| 3 | 99 | 1 | - | 4°C | 15 mm |
| 4 | 49 | 1 | 50 | 20°C | 15 mm |
| 5 | 30 | 1 | 70 | 20°C | 12 h |

6 le mélange suivant : 1 g de persulfate d'ammonium
1 g de triéthylamine
0,5 g d'octoate stanneux
30 g de H.E.M.A
70 g d'eau

Ce mélange au bout de 15 minutes forme un gel souple gonflant dans l'eau. On note que l'addition d'octoate

stanneux permet d'améliorer certaines propriétés comme le taux de gonflement.

Les sels obtenus à partir des compositions selon les exemples 1 à 3 sont solides et très rigides.

Le produit selon l'exemple 4 est souple, non cassant, de même que les produits 5 et 6.

On observe que le gel selon l'exemple 1 présente un taux de gonflement de l'ordre de 5 % alors que le gel selon l'exemple 6 a un taux de gonflement de 50 %.

Le module d'élasticité en compression peut être très élevé, dans les exemples 1 à 3,il est supérieur à 10 000 kg/cm2 et les résistances à la rupture sont supérieures à 100 kg/cm2.

Ces gels suivant leur dosages gonflent dans l'eau de 5 à 50 % dans certains cas, cette propriété s'accompagne d'un durcissement du gel. On note également dans ces exemples un très faible retrait lorsque ces gels sont conservés à l'abri de l'air.

Ces exemples illustrent l'intérêt de la présente invention. On peut en particulier régler le temps de gélification entre quelques minutes et quelques heures, ce qui est un avantage considérable puisque de cette manière on peut amener séparément la solution du monomère et le système catalytique et opérer la gélification sur place. De plus, selon l'invention ces solutions peuvent être préparées longtemps à l'avance en l'état liquide et être mélangées sur place sans manipulation particulière.

REVENDICATIONS

1) Composition polymérisable caractérisée par le fait qu'elle comprend au moins un monomère soluble dans l'eau du groupe des esters éthyléniques présentant au moins une fonction alcool et un système catalytique à base d'un sel stanneux organique.

2) Composition polymérisable selon la revendication 1, caractérisée par le fait que le monomère répond à la formule :

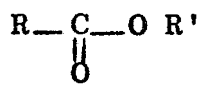

dans laquelle R = radical alkyle insaturé

R' = radical alkyle présentant une fonction alcool libre

3) Composition selon la revendication 2, caractérisée par le fait que le monomère est du groupe des dérivés hydroxyalkylacrylates et méthacrylates.

4) Composition selon la revendication 3, caractérisée par le fait que le monomère est du groupe du 2-hydroxyéthyl et 2-hydroxypropyl acrylate et méthacrylate.

5) Composition selon l'une des revendications 1 à 4 caractérisée par le fait que le sel stanneux est constitué par de l'octoate stanneux.

6) Composition selon l'une des revendications 1 à 5, caractérisée par le fait que le système catalytique comprend en outre des composés du groupe des persulfates alcalins et des polyamines.

7) Composition selon l'une des revendications 1 à 6, caractérisée par le fait que les solutions de monomère + catalyseur sont pratiquement pures.

8) Composition selon l'une des revendications 1 à 6, caractérisée par le fait que la solution renferme en poids de 20 à 80 % de monomère + catalyseur.

9) Application de la composition selon l'un des revendications 1 à 8 au traitement des sols.

## REVENDICATIONS

1) Nouveau procédé de polymérisation caractérisé par le fait que l'on met en oeuvre au moins un monomère soluble dans l'eau du groupe des esters éthyléniques présentant au moins une fonction alcool et un système catalytique à base d'un sel stanneux organique.

2) Procédé selon la revendication 1, caractérisé par le fait que le monomère répond à la formule :

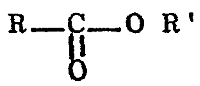

dans laquelle R = radical alkyle insaturé
R'= radical alkyle présentant une fonction alcool libre

3) Procédé selon la revendication 2, caractérisé par le fait que le monomère est du groupe des dérivés hydroxyalkylacrylates et méthacrylates.

4) Procédé selon la revendication 3, caractérisé par le fait que le monomère est du groupe du 2-hydroxyéthyl et 2-hydroxypropyl acrylate et méthacrylate.

5) Procédé selon l'une des revendications 1 à 4, caractérisé par le fait que le sel stanneux est constitué par de l'octoate stanneux.

6) Procédé selon l'une des revendications 1 à 5, caractérisé par le fait que le système catalytique comprend en outre des composés du groupe des persulfates alcalins et des polyamines.

7) Procédé selon l'une des revendications 1 à 6, caractérisé par le fait que les solutions de monomère + catalyseur sont pratiquement pures.

8) Procédé selon l'une des revendications 1 à 6, caractérisé par le fait que la solution renferme en poids de 20 à 80 % de monomère + catalyseur.

9) Nouveau procédé de traitement des sols caractérisé par le fait que l'on met en oeuvre une composition comprenant au moins un monomère soluble dans l'eau du groupe des esters éthyléniques présentant au moins une fonction alcool et un système catalytique à base d'un sel stanneux organique.

0021959

Office européen des brevets

# RAPPORT DE RECHERCHE EUROPEENNE

Numéro de la demande
EP 80 40 0855

## DOCUMENTS CONSIDERES COMME PERTINENTS

| Catégorie | Citation du document avec indication, en cas de besoin, des parties pertinentes | Revendication concernée |
|---|---|---|
| | US - A - 3 985 718 (H. CHABERT)<br>* Revendication 1; colonne 1, ligne 34; colonne 2, ligne 6; colonne 4, ligne 61 *<br>-- | 1,3,6 |
| | DE - A - 1 543 413 (CHAS-PFIZER)<br>* Revendication 1 *<br>---- | 1 |

CLASSEMENT DE LA DEMANDE (Int. Cl. 3)

C 08 F 20/28
2/10
4/40
4/72
C 09 K 17/00

DOMAINES TECHNIQUES RECHERCHES (Int. Cl. 3)

C 08 F 20/28
220/28
220/18
20/26
220/26
4/40

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-10-1980 | BOLETTI |